# EUROPÄISCHE PATENTSCHRIFT

(11) **EP 3 377 783 B1**
(45) Veröffentlichungstag und Bekanntmachung des Hinweises auf die Patenterteilung: **04.08.2021**
(21) Anmeldenummer: 16815704.8
(22) Anmeldetag: 16.11.2016
(51) Int. Cl.: F16D 13/58, F16D 13/48, F16D 13/40, F16D 13/46, F16D 13/52, B60K 6/387

(54) **REIBUNGSKUPPLUNG MIT EINER ROTATIONSACHSE**
FRICTION CLUTCH COMPRISING AN AXIS OF ROTATION
EMBRAYAGE À FRICTION PRÉSENTANT UN AXE DE ROTATION

(30) Priorität: 16.11.2015 DE 102015222573; 17.12.2015 DE 102015225615
(43) Veröffentlichungstag der Anmeldung: 26.09.2018
(73) Patentinhaber: Schaeffler Technologies AG & Co. KG, 91074 Herzogenaurach (DE)
(72) Erfinder: FINKENZELLER, Marc, 77723 Gengenbach (DE)
(86) Internationale Anmeldenummer: PCT/DE2016/200521
(87) Internationale Veröffentlichungsnummer: WO 2017/084667

(56) Entgegenhaltungen:
- EP-A1- 0 706 463
- EP-A1- 2 789 870
- DE-A1-102012 219 697
- DE-A1-102014 209 047
- US-A1- 2013 231 836

## Beschreibung

Die Erfindung betrifft eine Reibungskupplung gemäß dem Oberbegriff des Patentanspruchs 1 mit einer Rotationsachse zum lösbaren Übertragen eines Drehmoments zwischen einer ersten Antriebseinheit und einer zweiten Antriebseinheit, ein Hybridmodul für einen Antriebsstrang und einen Antriebsstrang, bevorzugt für ein Kraftfahrzeug.

Die Erfindung betrifft eine Reibungskupplung mit einer Rotationsachse zum lösbaren Übertragen eines Drehmoments zwischen einer ersten Antriebseinheit und einer zweiten Antriebseinheit, wobei die Reibungskupplung zumindest die folgenden Komponenten aufweist:
- ein Reibpaket;
- ein erstes Betätigungselement, welches dazu eingerichtet ist, im eingerückten Zustand das Reibpaket in einer ersten axialen Betätigungsrichtung zu verpressen. Die Reibungskupplung ist vor allem dadurch gekennzeichnet, dass weiterhin ein zweites Betätigungselement vorgesehen ist, welches auf der dem ersten Betätigungselement gegenüberliegenden Seite des Reibpakets angeordnet ist und dazu eingerichtet ist, im eingerückten Zustand das Reibpaket in einer zweiten axialen Betätigungsrichtung zu verpressen, wobei die zweite axiale Betätigungsrichtung der ersten axialen Betätigungsrichtung entgegengerichtet ist.

Aus dem Stand der Technik sind Hybridantriebe mit zwei Antriebseinheiten, einem Verbrennungsmotor und einem Elektromotor, bekannt. In einer Konfiguration wird der Elektromotor als Fahrmotor eingesetzt, wobei der Verbrennungsmotor im Bedarfsfall zuschaltbar ist. In dieser Konfiguration ist vorteilhafterweise der Elektromotor als Anlasser zum Starten des Verbrennungsmotors einsetzbar. Um einen solchen Vorgang auszuführen, ist eine Reibungskupplung zwischen den beiden Antriebseinheiten vorgesehen. Dabei soll die Reibungskupplung einerseits in der Lage sein, ein durch den Verbrennungsmotor aufgebrachtes, hohes Zugmoment möglichst energiearm zu übertragen, und andererseits in der Lage sein, einen geregelten Schubbetrieb des Verbrennungsmotors zu ermöglichen. Somit sind die konventionellen Funktionen des Verbrennungsmotors weiterhin vorteilhaft in den Hybridantrieb einbringbar.

Bisher sind Reibungskupplungen bekannt, mittels derer ein Drehmoment innerhalb eines Antriebsstranges lösbar übertragbar ist. Zum lösbaren Übertragen weist die Reibungskupplung zumindest ein Reibpaket auf. Das Reibpaket weist eine axial verschiebbare, in der Regel mit der Abtriebswelle rotationsfeste, Anpressplatte auf, welche gegen zumindest eine korrespondierende Reibscheibe pressbar ist. In vielen Konfigurationen umfasst das Reibpaket eine Anpressplatte und eine Gegenplatte, wobei die Gegenplatte axial fixiert ist und rotationsfest mit der Abtriebswelle verbunden ist. Eine Reibscheibe welche häufig als Reiblamelle ausgebildet ist, ist bei dieser Konfiguration zwischen der Anpressplatte und der Gegenplatte angeordnet und verpressbar. Eine Reibkraft ist somit beidseitig auf die Reibscheibe aufbringbar, also zwei Reibpaarungen gebildet sind. In einer anderen Konfiguration ist eine Mehrzahl von Reibscheiben, bevorzugt als Reiblamellen ausgeführt, mit mindestens einer zusätzlichen Zwischenplatte, bevorzugt als Reiblamellen ausgeführt, vorgesehen. Vorzugsweise ist eine Zwischenplatte zwischen je zwei Reibscheiben angeordnet. Die mindestens eine Zwischenplatte ist genau wie die Anpressplatte axial verschiebbar und mit der Abtriebswelle rotationsfest verbunden. In einer bevorzugten Konfiguration ist das Reibpaket als Lamellenpaket aufgebaut, bei welchem abwechselnd sogenannte Außenlamellen, welche in einem Außenkorb rotatorisch fixiert und axial verschiebbar gelagert sind, und sogenannte Innenlamellen, welche in einem Innenkorb rotatorisch fixiert und axial verschiebbar gelagert sind, vorgesehen sind. Von einem Betätigungselement, welches von einer Seite auf das Lamellenpaket einwirkt wird eine Anpresskraft übertragen, sodass eine Reibkraft zwischen der Mehrzahl der Reibpaarungen aufgebaut wird. Bei jeglicher Konfiguration ergibt sich infolge der Anpresskraft, welche auf die Anpressplatte ausübbar ist, eine Reibkraft über die Reibfläche(n), welche multipliziert mit dem mittleren Radius der Reibfläche(n) ein übertragbares Drehmoment ergibt/ergeben.

Bisher sind keine schlüssigen Konzepte für den Einsatz und die Betätigung einer Reibungskupplung bekannt, die eine sanfte und individuell mechanisch begrenzte Drehmomentübertragung sicherstellt.

Aus der EP 0706463 A1 ist eine Reibungskupplung bekannt, die auf den Oberbegriff des Patentanspruchs 1 lesbar ist.

Die DE 10 2014 209 047 A1 offenbart eine Reibungskupplung die mit einer Kugelrampenvorrichtung betätigt ist.

Der vorliegenden Erfindung liegt die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden.

Die Erfindung betrifft eine Reibungskupplung mit einer Rotationsachse zum lösbaren Übertragen eines Drehmoments zwischen einer ersten Antriebseinheit und einer zweiten Antriebseinheit, wobei die Reibungskupplung zumindest die folgenden Komponenten aufweist:
- ein Reibpaket mit zumindest einer Reibplatte und zumindest einer korrespondierenden Reibscheibe zum Übertragen eines Drehmoments im verpressten Zustand, wobei die zumindest eine Reibplatte mit einer ersten Antriebseinheit verbindbar ist und die zumindest eine Reibscheibe mit einer zweiten Antriebseinheit verbindbar ist;
- ein erstes Betätigungselement, welches dazu eingerichtet ist, im eingerückten Zustand das Reibpaket in einer ersten axialen Betätigungsrichtung zu verpressen. Die Reibungskupplung ist vor allem dadurch gekennzeichnet, dass weiterhin ein zweites Betätigungselement vorgesehen ist, welches auf der dem ersten Betätigungselement gegenüberliegenden Seite des Reibpakets angeordnet ist und dazu eingerichtet ist, im eingerückten Zustand das Reibpaket in einer zweiten axialen Betätigungsrichtung zu verpressen, wobei die zweite axiale Betätigungsrichtung der ersten axialen Betätigungsrichtung entgegengerichtet ist.

Die Reibungskupplung ist eingerichtet, ein Drehmoment lösbar von einer ersten Abtriebswelle auf eine zweite Abtriebswelle zu übertragen. Dazu umfasst die Reibungskupplung ein Reibpaket mit mindestens einer Reibplatte und mit mindestens einer korrespondierenden Reibscheibe. Das Verpressen der mindestens einen Reibplatte mit der mindestens einen korrespondierenden Reibscheibe ermöglicht wie oben beschrieben die Übertragung eines Drehmoments. Die mindestens eine Reibscheibe ist vorzugsweise in einem Hybridantrieb mit einer ersten Antriebseinheit verbunden und die mindestens eine Reibplatte ist vorzugsweise mit einer zweiten Antriebseinheit verbunden. Die erste Antriebseinheit ist dabei bevorzugt ein Elektromotor und die zweite Antriebseinheit bevorzugt ein Verbrennungsmotor. Die Reibungskupplung ist aber auch in einer anderen Konfiguration einsetzbar, wobei bevorzugt die eine Antriebseinheit zum Antreiben der jeweils anderen eingerichtet ist, zum Beispiel zum Anlassen, zur Rekuperation oder zum mechanischen Speichern von Rotationsenergie.

Ein Drehmoment ist hierbei aktiv von außen schaltbar von der ersten Antriebseinheit auf die zweite Antriebseinheit übertragbar. Hierzu wird das Reibpaket mittels eines ersten Betätigungselementes verpresst. Hierzu wird eine externe Betätigungskraft, zum Beispiel von einem sogenannten konzentrischen Nehmerzylinder (CSC, englisch: Concentric Slave Cylinder), auf das Reibpaket übertragen. Das erste Betätigungselement liegt an einer Reibplatte des Reibpakets an, zum Beispiel einer ersten Endlamelle, welche also an einer ersten Seite axial außenseitig angeordnet ist. Das Reibpaket wird dabei insgesamt in einer ersten axialen Betätigungsrichtung gegen einen Anschlag verschoben und daraufhin verpresst. Somit ist dann mittels des Reibpakets ein Drehmoment von der ersten Antriebseinheit auf die zweite Antriebseinheit übertragbar.

Im Gegensatz zu einem Reibpaket einer konventionellen Reibungskupplung ist ein zweites Betätigungselement vorgesehen, welches dazu eingerichtet ist, das selbige Reibpaket in der entgegengesetzten Richtung gegen einen Anschlag zu verschieben und daraufhin zu verpressen. Die Betätigungskraft des ersten Betätigungselements wird in einer bevorzugten Ausführungsform dann überwunden oder die Ausübung der Betätigungskraft mittels des ersten Betätigungselements aufgehoben. Alternativ oder ergänzend bildet das erste Betätigungselement den Anschlag für die andere Betätigungsrichtung. Vorteilhaft bei dieser Reibungskupplung ist, dass ein Drehmoment ohne Unterbrechung übertragbar ist, zum Beispiel, wenn die Betätigungskraft des ersten Betätigungselements überwunden wird und das Reibpaket von der entgegengerichteten Betätigungskraft des zweiten Betätigungselements gegen die erste Betätigungsrichtung gegen den zweiten Anschlag verschoben wird. Während dieses Vorgangs liegt zumindest die erste Betätigungskraft an. Das zweite Betätigungselement ist bevorzugt zum Ausüben einer größeren (zweiten) Betätigungskraft als das erste Betätigungselement eingerichtet.

Mittels dieser Reibungskupplung ist eine unterbrechungsfreie Übertragung eines Drehmoments ermöglicht, sodass ein sanfter Übergang vom anliegenden Drehmoment der ersten Antriebseinheit in einem mittels des ersten Betätigungselements verpressten Zustand der Reibungskupplung auf ein, in der Regel größeres, Drehmoment der zweiten Antriebseinheit möglich ist. Die Betätigungselemente sind dabei mittels jeweils zugeordneter Kraftquellen betätigbar. Hierdurch ist zudem die jeweils erwünschte oder geforderte Anpresskraft definiert aufbringbar, beispielsweise indem die Betätigungselemente eine (unterschiedliche) maximale Anpresskraft übertragen können, sodass bei einem jeweils (verschieden) zu großen Drehmoment die Reibelemente zueinander schlupfen. Damit ist das übertragbare Drehmoment für die jeweilige Antriebseinheit sicher begrenzt.

In einer weiteren vorteilhaften Ausführungsform der Reibungskupplung umfasst das erste Betätigungselement eine derart weiche Anpressfeder, dass die maximale erste Anpresskraft geringer ist als die maximale zweite Anpresskraft.

Bei dieser Ausführungsform wird erreicht, dass mittels des Reibpakets im mittels des ersten Betätigungselements verpressten Zustand maximal ein solches Grenzdrehmoment übertragbar ist, welches geringer ist als ein charakteristisches Drehmoment einer zweiten Antriebseinheit bei einer Solldrehzahl. Weil das übertragbare Drehmoment von der Anpresskraft, also der Betätigungskraft proportional abhängt, ist das übertragbare Drehmoment mittels einer begrenzten Betätigungskraft begrenzbar.

Das erste Betätigungselement in dieser Ausführungsform umfasst eine derart weiche Anpressfeder, dass die Anpresskraft schwächer ist, als dies notwendig ist, um das charakteristische Drehmoment bei einer Solldrehzahl der zweiten Antriebseinheit mittels des Reibpakets zu übertragen. Die weiche Anpressfeder führt also dazu, dass nur ein Grenzmoment, vorzugsweise von der zweiten Antriebseinheit auf die erste Antriebseinheit, übertragbar ist, wenn das Reibpaket mittels des ersten Betätigungselements verpresst ist. Liegt nun ein Drehmoment der zweiten Antriebseinheit an, welches größer ist als das Grenzdrehmoment, führt dies zu einem Schlupfen zwischen den Reibpaarungen.

Mittels des zweiten Betätigungselements ist vorzugsweise ein im Vergleich zum ersten Betätigungselement derart höhere Anpresskraft ausübbar, sodass damit ein höheres Drehmoment übertragbar ist. Hierbei ist das Reibpaket bevorzugt auch bei einem maximalen Drehmoment ohne Schlupf betreibbar. Der Hauptanteil des Drehmoments ist somit im mittels des zweiten Betätigungselements verpressten Zustand vollständig mittels des Reibpakets übertragbar.

In einer weiteren vorteilhaften Ausführungsform der Reibungskupplung ist zwischen zwei benachbarten Reibplatten und/oder zwischen zwei benachbarten Reibscheiben jeweils eine Beabstandungsfeder, bevorzugt eine Wellfeder, zum axialen Auseinanderschieben der benachbarten Reibplatten beziehungsweise Reibscheiben vorgesehen.

Die mindestens eine Beabstandungsfeder in dem Reibpaket bewirkt das Auseinanderschieben von den benachbarten Reibscheiben und/oder von den benachbarten Reibplatten, wenn die Betätigungskraft soweit reduziert ist, dass eine Drehmomentübertragung unterbrochen sein soll. Die Beabstandungsfeder unterstützt dabei ein Lösen der jeweiligen Reibpaarungen und stellt damit sicher, dass die Übertragung getrennt ist, oder zumindest ausreichend reduziert ist. Bevorzugt ist zwischen jeder der benachbarten Reibscheiben und Reibplatten jeweils eine Beabstandungsfeder vorgesehen. Eine Beabstandungsfeder ist hierbei vorzugsweise von einer Wellfeder gebildet. Mittels Aufbringen einer Betätigungskraft eines der beiden Betätigungselemente wird die Beabstandungskraft überwunden und das Reibpaket verpresst.

In einer weiteren vorteilhaften Ausführungsform der Reibungskupplung ist das Reibpaket als Lamellenpaket gebildet und die Reibungskupplung weist einen Außenkorb und einen Innenkorb auf, wobei die Reibplatten im Außenkorb rotatorisch fest und axial verschiebbar eingehängt und die Reibscheiben im Innenkorb rotatorisch fest und axial verschiebbar eingehängt sind.

In dieser Ausführungsform wird das Reibpaket durch ein Lamellenpaket gebildet. Das Lamellenpaket umfasst zum einen zumindest eine Innenlamelle und zum anderen zumindest zwei Außenlamellen, wobei die Innenlamellen die Reibscheiben bilden und die Außenlamellen die Reibplatten bilden. Die Innenlamellen sind mit der ersten Antriebseinheit und die Außenlamellen sind mit der zweiten Antriebseinheit verbindbar und im Zusammenbau in einem Antriebsstrang jeweils fest drehmomentübertragend verbunden. Dabei sind beide Lamellenarten in zugehörigen Körben axial verschiebbar und rotatorisch fest mittels einer korrespondierenden Verzahnung eingehängt. Die Innenlamellen sind in dem Innenkorb und die Außenlamellen sind in dem Außenkorb eingehängt.

Erfindungsgemäß weist die Reibungskupplung weiterhin zumindest die folgenden Komponenten auf:
- eine Kugelrampenvorrichtung mit einer Stelllänge, welche einen Außenrampenring und einen Innenrampenring umfasst, wobei mittels eines relativen Verdrehens des Innenrampenrings gegenüber dem Außenrampenring die Stelllänge veränderbar ist;
- einen Freilauf, mit einer Ausgangsseite und einer Eingangsseite, wobei die Eingangsseite mit dem Innenrampenring der Kugelrampenvorrichtung und die Ausgangsseite mit der zumindest einen Reibscheibe verbunden ist.

Dabei ist das zweite Betätigungselement zwischen dem Reibpaket und dem Außenrampenring der Kugelrampenvorrichtung angeordnet. Das zweite Betätigungselement ist bei einer minimalen Stelllänge der Kugelrampenvorrichtung ausgerückt und bei einer maximalen Stelllänge der Kugelrampenvorrichtung mittels der Kugelrampenvorrichtung eingerückt. Der Freilauf ist derart eingerichtet, dass bei einer größeren Rampendrehzahl des Innenrampenrings als einer Scheibendrehzahl der zumindest einen Reibscheibe ein Drehmoment zwischen der Ausgangsseite und der Eingangsseite, vorzugsweise drehzahlgleich, übertragbar ist und bei einer kleineren Rampendrehzahl als einer Scheibendrehzahl die Ausgangsseite und die Eingangsseite getrennt sind.

Diese Konfiguration ermöglicht ein Verpressen des Reibpakets mittels des zweiten Betätigungselements, ohne dass eine externe Energiezufuhr für einen nach obiger Vorgabe geregelten Betrieb mit einer Zugmomentübertragung und einer Schubmomentübertragung von der zweiten Antriebseinheit notwendig ist.

Die Kugelrampenvorrichtung ist zwischen dem zweiten Betätigungselement und der Eingangsseite des Freilaufs angeordnet. Dabei sind der Außenrampenring der Kugelrampenvorrichtung, vorzugsweise unmittelbar, mit dem zweiten Betätigungselement und der Innenrampenring der Kugelrampenvorrichtung, vorzugsweise unmittelbar, mit der Eingangsseite des Freilaufs verbunden. In einem Zustand, in welchem der Freilauf getrennt ist, läuft der Innenrampenring frei und wird von dem Außenrampenring mitgeschleppt. Erst wenn der Freilauf blockiert, also ein Drehmoment überträgt, ist dem Innenrampenring eine von dem Außenrampenring verschiedene Drehzahl aufzwingbar. Hierzu muss an der Ausgangsseite des Freilaufs ein dem Außenrampenring entgegengerichtetes Drehmoment anliegen. Dies liegt vor, wenn die erste Antriebseinheit mit einer geringeren Drehzahl als die zweite Antriebseinheit betrieben wird. Um diesen Zustand einzustellen, muss entweder die Reibungskupplung gelöst, also eine Drehmomentübertragung unterbrochen sein, oder die Reibungskupplung schlupfend betrieben werden. Letzteres ist ein bevorzugter Betriebszustand, wobei der schlupfende Betrieb bevorzugt mittels der Weichheit des ersten Betätigungselements und damit der Begrenzung der (ersten) Anpresskraft mechanisch sichergestellt ist.

Durch ein resultierendes relatives Verdrehen des Innenrampenrings gegenüber dem Außenrampenring wird die Stelllänge der Kugelrampeneinrichtung verändert. Infolge einer Verlängerung (oder Verkürzung in Verbindung mit einem Hebel als Betätigungselement) der Stelllänge der Kugelrampenvorrichtung wird das mit dem Außenrampenring verbundene zweite Betätigungselement axial auf das Reibpaket zu bewegt, bevorzugt verschoben, und somit das Reibpaket verpresst. In einer bevorzugten Ausführungsform ist die erzeugte (zweite) Anpresskraft größer als die (erste) Anpresskraft des ersten Betätigungselements, sodass das Reibpaket derart verpresst ist, dass das übertragbare Drehmoment wie oben beschrieben in diesem zweiten verpressten Zustand gegenüber dem ersten verpressten Zustand vergrößert ist. In diesem Zustand ist das Drehmoment der zweiten Antriebseinheit vollständig über die Reibungskupplung übertragbar. Lediglich ein geringer Anteil des Drehmoments wird auf die Kugelrampeneinrichtung geleitet und in die zweite Anpresskraft gewandelt.

Weist die Kugelrampeneinrichtung hingegen ihre minimale (oder bei einem Hebel als zweites Betätigungselement maximale) Stelllänge auf, ist das zweite Betätigungselement maximal ausgerückt. Dann ist das Reibpaket nur mittels des ersten Betätigungselements verpressbar und ansonsten gelöst.

Die Reibungskupplung gemäß dieser Konfiguration ist also bei einer ersten Antriebseinheit als Elektromotor für den Fahrbetrieb und einer zweiten Antriebseinheit als Verbrennungsmotor wie folgt betreibbar: Bei elektrischer Fahrt, bei Segelbetrieb oder bei Rekuperation ist die Reibungskupplung gelöst oder geöffnet und der Verbrennungsmotor wird nicht mitgeschleppt. Zur Erzeugung eines Schubmoments, also Anlassen des Verbrennungsmotors oder Einlegen der Motorbremse, wird das Reibpaket mittels des ersten Betätigungselements aktiv betätigt. Sobald der Verbrennungsmotor läuft und der Elektromotor eingeholt ist, greift der Freilauf. Das dabei übertragene Drehmoment wird über den Freilauf auf den Innenrampenring übertragen und in der Kugelrampeneinrichtung in eine axiale Anpresskraft umgewandelt. Die Kraftübertragung auf das Reibpaket erfolgt dabei über das zweite Betätigungselement. Bei diesem Vorgang wird das Reibpaket in die entgegengesetzte zweite Betätigungsrichtung verlagert, bis das Reibpaket am zweiten Anschlag anliegt. Die Reibungskupplung ist nun im Zugbetrieb ohne externe Energiezugabe geschlossen. Wird der Verbrennungsmotor nicht mehr benötigt, kann dieser einfach ausgeschaltet werden. Sobald der Elektromotor schneller dreht als der Verbrennungsmotor öffnet die Reibungskupplung wieder selbsttätig, weil der Freilauf nicht mehr greift und somit die Kugelrampeneinrichtung nicht mehr tordiert wird.

In einer weiteren vorteilhaften Ausführungsform der Reibungskupplung ist der Innenrampenring mittels eines Axiallagers am Außenkorb abgestützt, bevorzugt mittelbar über einen Freilauftopf, welcher eingangsseitig mit dem Freilauf verbunden ist.

Der Innenrampenring ist bei dieser bevorzugten Ausführungsform direkt am Außenkorb des Lamellenpakets gelagert, wobei der Außenkorb bevorzugt hier nach radial innen geführt ist, um radial innen eine direkte Anbindung oder eine mittelbare Anbindung über einen Schwingungsdämpfer und/oder über einen Schwingungstilger, an eine zweite Abtriebswelle einer zweiten Antriebseinheit zu bilden. Das Lager ist hierbei bevorzugt ein Axialwälzlager, besonders bevorzugt ein Nadellager. Dabei wird bei geringer Reibung ein besonders geringer axialer Bauraum benötigt. Unabhängig von dieser Lagerausführung ist der nach radial innen geführte Abschnitt des Außenkorbs als (mittelbarer) Anschlag für die erste Betätigungsrichtung eingerichtet. In der mittelbaren Ausführung ist im mittels des ersten Betätigungselements verpressten Zustand das zweite Betätigungselement, zum Beispiel ein rampenseitiger Drucktopf, zwischen dem Lamellenpaket und dem Außenkorb angeordnet.
Der Innenrampenring der Kugelrampeneinrichtung ist vorzugsweise mit einem Freilauftopf verbunden. Der Freilauftopf ist das Bindeglied zwischen dem Innenrampenring der Kugelrampenvorrichtung und dem Freilauf. Beispielsweise weist der Freilauftopf freilaufseitig eine, bevorzugt einstückig gebildete, Freilaufverzahnung auf und ist rampenseitig mit dem Innenrampenring verbunden. Bei einer Ausführungsform ist der Innenrampenring mittels des Freilauftopfs am Außenkorb abgestützt.

In einer weiteren vorteilhaften Ausführungsform der Reibungskupplung ist zwischen dem Außenrampenring und dem Reibpaket ein (rampenseitiger) Drucktopf angeordnet, welcher im Außenkorb rotatorisch fest und axial verschiebbar eingehängt ist.

Diese Ausführungsform ist besonders einfach montierbar, indem der rampenseitige Drucktopf wie das Lamellenpaket zur Montage in den Außenkorb einlegbar ist. Über eine korrespondierende Verzahnung wird der Drucktopf dauerhaft mit dem Außentopf rotatorisch mitgeführt, wobei zugleich der Drucktopf axial verschiebbar gelagert ist. Weiterhin ist der Drucktopf selbst für Kleinserien und Großserien kostengünstig fertigbar, beispielsweise als Tiefziehbauteil oder mittels Kaltumformen. Bei einer geeigneten Ausführung ist der Drucktopf als erster Anschlag für das Lamellenpaket für das Verpressen mittels des ersten Betätigungselements einsetzbar, welcher am Außenkorb abgestützt ist. Den zweiten Anschlag für das Lamellenpaket für ein Verpressen mittels des zweiten Betätigungselements, bevorzugt dem hier beschriebenen Drucktopf, ist bevorzugt ein Sicherungsring vorgesehen, welcher an der gegenüberliegenden Seite des Lamellenpakets radial eingelegt, bevorzugt eingespannt, ist.

In einer weiteren vorteilhaften Ausführungsform der Reibungskupplung weist der Innenkorb und die Eingangsseite des Freilaufs je eine zueinander fluchtend und/oder überdeckend ausrichtbare Durchgangsöffnung auf, durch welche ein Schraubinstrument hindurchführbar ist, um die Reibungskupplung mit einer Abtriebswelle einer ersten Antriebseinheit und/oder einer zweiten Antriebseinheit zu verschrauben.

Von den Kunden, insbesondere den Fahrzeugherstellern, werden zunehmend fertig vormontierte Module angefordert. Dies bietet auch für den Zulieferer den Vorteil, dass er ganze Systeme in einem Modul anbieten kann, welche bereits von den eigenen Mitarbeitern montiert und geprüft worden sind. Dies bringt allerdings Nachteile bei der Montierbarkeit der Module mit sich, insbesondere dann, wenn eine hohe Kompaktheit erforderlich ist. Hier wird nun vorgeschlagen, für die Befestigung der Reibkupplung notwendige Durchgangsöffnungen vorzusehen. Die zueinander fluchtend ausrichtbaren Durchgangsöffnungen für ein Schraubinstrument sind in den Freilauftopf und in den Innenkorb integriert und führen zugleich zu einer Massereduktion an im Betrieb rotierenden und beschleunigten Bauteilen. Durch die fluchtenden Durchgangslöcher ist die Reibungskupplung mit einer Abtriebswelle einer Antriebseinheit, bevorzugt mit der zweiten Abtriebswelle der zweiten Antriebseinheit verschraubbar. Besonders bevorzugt sind ebenfalls die notwendigen Schrauben durch die Durchgangsöffnungen führbar. Bevorzugt ist die Anzahl der Durchgangsöffnungen über den Umfang kleiner als die Anzahl der Verschraubungen und/oder die Durchgangsöffnungen sind jeweils achssymmetrisch angeordnet.

Gemäß einem weiteren Aspekt der Erfindung wird ein Hybridmodul für einen Antriebsstrang, bevorzugt eines Kraftfahrzeugs, vorgeschlagen, welches zumindest die folgenden Komponenten aufweist:
- eine Reibungskupplung gemäß einer Ausführungsform nach der obigen Beschreibung; und
- eine erste Antriebseinheit, welche ein Elektromotor ist. Dabei ist die elektrische Antriebseinheit mit der zumindest einen Reibscheibe drehmomentübertragend, und bevorzugt mit der Ausgangsseite des Freilaufs verbunden.

Das Hybridmodul umfasst bereits den Elektromotor mit einer Reibkupplung in einer Ausführungsform gemäß der obigen Beschreibung. Das Hybridmodul ist bevorzugt als vormontierte und besonders bevorzugt voll funktionsfähige Baueinheit in einem Antriebsstrang montierbar. In einer besonders bevorzugten Ausführungsform ist die Reibkupplung in den Rotor des Elektromotors integriert, wobei bevorzugt der Rotor als Rotortopf ausgeführt ist. Die Hochzeit aus zweiter Antriebseinheit, bevorzugt einem Verbrennungsmotor, und dem Hybridmodul ist bevorzugt über die oben beschriebenen Durchgangsöffnungen möglich.

Besonders bevorzugt umfasst das Hybridmodul weiterhin einen Schwingungsdämpfer, zum Beispiel ein Zweimassenschwungrad, und/oder einen Schwingungstilger, zum Beispiel ein Fliehkraftpendel. Das Hybridmodul ist bevorzugt direkt an einer Kurbelwelle eines Verbrennungsmotors fluchtend montierbar. Auf der Ausgangsseite ist das Hybridmodul zum Beispiel mit einem Getriebe oder direkt an einen Verbraucher anbindbar.

Gemäß einem weiteren Aspekt der Erfindung wird ein Antriebsstrang für ein Hybridfahrzeug vorgeschlagen, welcher eine zweite Antriebseinheit mit einer zweiten Abtriebswelle und ein Hybridmodul aufweist. Dabei ist die zweite Antriebseinheit über ihre zweite Abtriebswelle mittels der ersten Antriebseinheit antreibbar, wenn das Reibpaket der Reibungskupplung verpresst ist.

Der Antriebsstrang ist dazu eingerichtet, ein von dem Hybridmodul und/oder der zweiten Antriebseinheit abgegebenes Drehmoment für zumindest einen Verbraucher Iösbar, also zuschaltbar und abschaltbar, bereitzustellen. Ein beispielhafter Verbraucher ist zumindest ein Antriebsrad eines Kraftfahrzeugs und/oder eine elektrische Speichereinrichtung zum Speichern und Bereitstellen von (zum Beispiel rekuperierter) elektrischer Energie. Umgekehrt ist auch eine Aufnahme einer von zum Beispiel einem Antriebsrad eingebrachten Trägheitsenergie umsetzbar. Die Trägheitsenergie des zumindest einen Antriebsrads ist mittels der Reibungskupplung mit der Motorbremse des Verbrennungsmotors abführbar und/oder auf den Elektromotor, welcher als elektrischer Generator zur Rekuperation betreibbar ist, also zur elektrischen Speicherung der Bremsenergie, leitbar. Der hier vorgeschlagene Antriebsstrang mit dem Hybridmodul ist einfach montierbar und erfüllt auf einem kompakten Bauraum die komplexen Anforderungen an die Nutzbarkeit der Funktionen der beiden Antriebseinheiten. Darüber hinaus ist in einer bevorzugten Ausführungsform das Einkuppeln der gerade angelassenen zweiten Antriebseinheit, dem Verbrennungsmotor, oder das Einkuppeln zur Nutzung der Motorbremse ohne externe Energiezufuhr und ohne von außen gesteuerte Eingabe mechanisch gekoppelt ausgeführt.

Gemäß einem weiteren Aspekt der Erfindung wird ein Hybridfahrzeug vorgeschlagen, welches zumindest ein Antriebsrad aufweist, welches mittels eines Antriebsstrangs gemäß der obigen Beschreibung antreibbar ist.

Die meisten Kraftfahrzeuge weisen heutzutage einen Frontantrieb auf und ordnen daher bevorzugt das Antriebsaggregat vor der Fahrerkabine und quer zur Hauptfahrrichtung an. Der Bauraum ist gerade bei einer solchen Anordnung besonders gering und es ist daher besonders vorteilhaft, ein Hybridmodul kleiner Baugröße zu verwenden.

Verschärft wird diese Problematik bei Personenkraftwagen der Kleinwagenklasse nach europäischer Klassifizierung. Die verwendeten Funktionseinheiten in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Der oben beschriebene Antriebsstrang weist ein Hybridmodul geringer Baugröße auf. Zugleich sind alle Vorteile des Verbrennungsmotors und alle Vorteile des Elektromotors nutzbar, indem ein sanftes Einkuppeln beim Zuschalten des Verbrennungsmotors mechanisch geregelt ist. Besonders bevorzugt schaltet sich der angelassene Verbrennungsmotor bei Erreichen der Betriebsdrehzahl mechanisch gekoppelt zu, ohne dass hierzu externe Energie zugeführt werden muss oder eine externe Eingabe vorgenommen werden muss.

Personenkraftwagen werden einer Fahrzeugklasse nach beispielsweise Größe, Preis, Gewicht und Leistung zugeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im Britischen Markt entsprechen sie der Klasse Supermini beziehungsweise der Klasse City Car. Beispiele der Kleinstwagenklasse sind ein Volkswagen up! oder ein Renault Twingo. Beispiele der Kleinwagenklasse sind ein Alfa Romeo Mito, Volkswagen Polo, Ford Fiesta oder Renault Clio.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
Fig. 1: eine Schnittansicht eines Ausführungsbeispiels der Reibungskupplung; und
Fig. 2: ein Antriebsstrang in einem Kraftfahrzeug mit Reibungskupplung.

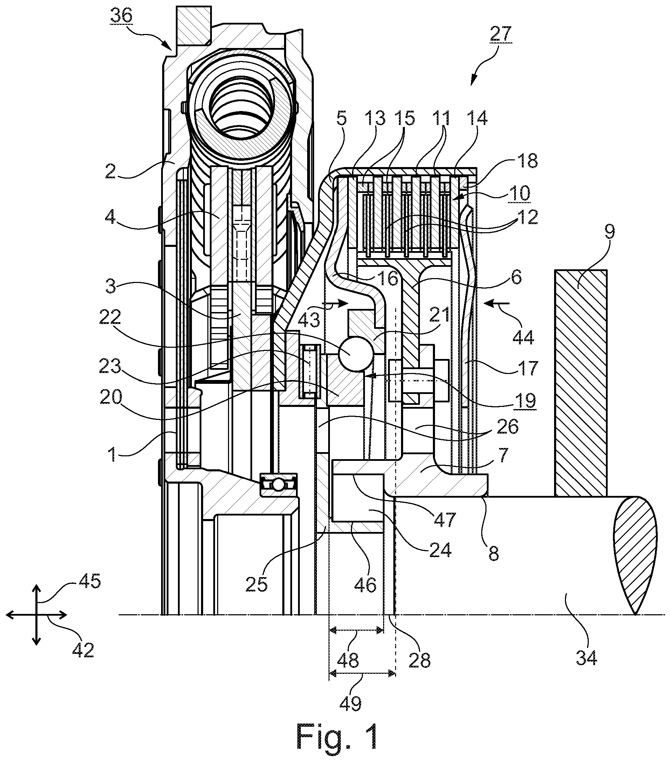

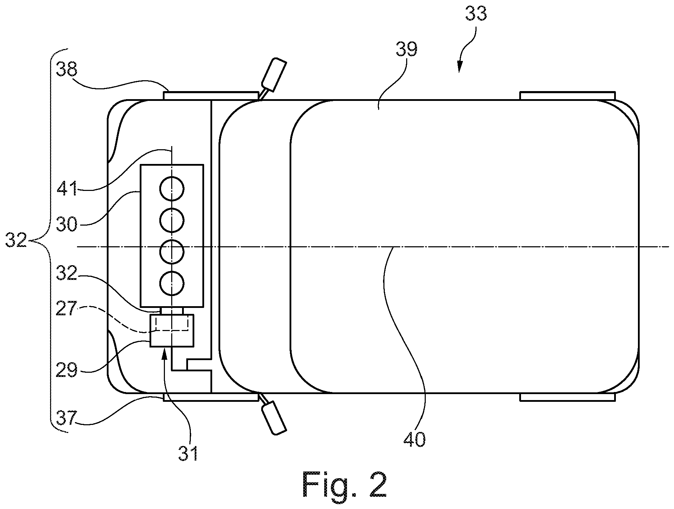

Die Figur 1 betrifft ein bevorzugtes Ausführungsbeispiel eines Zusammenbaus von einem Zweimassenschwungrad, einer Reibungskupplung 27 zum Ankoppeln und Abkoppeln eines Verbrennungsmotors (zweite Antriebseinheit 30) an einen und von einem Antriebsstrang eines Hybridfahrzeugs 33 und einer elektrischen Maschine (erste Antriebseinheit 29), auch als Elektromotor oder elektrischer Fahrmotor bezeichnet. Die Antriebseinheiten 29 und 30 sind in Fig. 2 gezeigt. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele des Antriebsstrangs, zum Beispiel eines Hybridfahrzeugs 33, die Teilkombinationen der in Folgenden erläuternden Merkmale aufweisen. Insbesondere betrifft die nachfolgende Beschreibung Ausführungsbeispiele der Reibungskupplung 27.

Auf der Eingangsseite des in Figur 1 dargestellten Ausschnitts eines Antriebsstrangs 32 (vergleiche Fig. 2) eines Hybridfahrzeugs 33 ist eine Primärseite 2 eines Zweimassenschwungrads 36 mit einer Befestigung 1 für die Anbindung an eine Kurbelwelle eines nicht dargestellten Verbrennungsmotors, welcher die zweite Antriebseinheit 30 bildet, versehen. Eine Sekundärseite 3 des Zweimassenschwungrads 36 weist ein Fliehkraftpendel 4 auf. Zusammen mit dem Antriebsstrang 32 ist die Reibungskupplung 27 drehbar um eine Drehachse (D), auch Rotationsachse 28 genannt, gelagert. Die Sekundärseite 3 des Zweimassenschwungrads 36 ist mit einem Außenkorb 5 der Reibungskupplung 27 verbunden.

Die Reibungskupplung 27 ist zum Ankoppeln und Abkoppeln des Verbrennungsmotors 30 an den beziehungsweise vom Antriebsstrang 32 des Hybridfahrzeugs 33 ausgebildet und wird auch als K0-Kupplung bezeichnet. Die Reibungskupplung 27 ist hier als trockene Lamellenkupplung ausgebildet und ist mittels einer externen, nicht dargestellte Aktoreinrichtung, zum Beispiel einen konzentrischen Nehmerzylinder (CSC), im Schubbetrieb für den Start des Verbrennungsmotors 30 oder für die Nutzung der Motorbremse einrückbar. Zusätzlich zum Außenkorb 5 weist die Reibungskupplung 27 einen in radialer Richtung 45 (R) der Reibungskupplung 27 innerhalb des Außenkorbs 5 angeordneten Innenkorb 6 und eine zwischen dem Außenkorb 5 und dem Innenkorb 6 angeordnete Reibpaarung 10 auf. Durch die Reibpaarung 10 ist im eingerückten Zustand ein Drehmoment vom Außenkorb 5 auf den Innenkorb 6 übertragbar. Ferner weist die Reibungskupplung 27 ein zweites Betätigungselement, hier einen ersten Drucktopf 16, durch den die Reibpaarung 10 in axialer Richtung 42 (A) der Reibungskupplung 27 in einer zweiten Betätigungsrichtung 43 (B1) einrückbar ist, und ein erstes Betätigungselement, hier einen zweiten Drucktopf 17, auf, mittels dessen die Reibpaarung 10 in einer ersten Betätigungsrichtung 44 (B2) einrückbar ist, die der zweiten Betätigungsrichtung 43 entgegengerichtet ist.

Der erste Drucktopf 16 steht mit einer Kugelrampeneinrichtung 19 in Wirkverbindung, durch die ein Teil eines auf einer Abtriebsseite der Reibungskupplung 27 anliegenden Drehmoments in eine in der zweiten Betätigungsrichtung 43 (B1) wirkende (zweite) Anpresskraft umsetzbar ist.

Der zweite Drucktopf 17 ist radial innen durch die zuvor genannte und nicht gezeigte Aktoreinrichtung in der ersten Betätigungsrichtung 44 (B2) betätigbar, um die Reibpaarung 10 unabhängig vom ersten Drucktopf 16 einrücken zu können. Gleichermaßen vermag auch der erste Drucktopf 16 die Reibpaarung 10 unabhängig vom zweiten Drucktopf 17 einzurücken.

Die Kugelrampeneinrichtung 19 ist in radialer Richtung 45 (R) und/oder in axialer Richtung 42 (A) innerhalb der Reibungskupplung 27, vorzugsweise innerhalb des Außenkorbs 5 und/oder innerhalb der Reibpaarung 10 angeordnet. Ferner stützt sich die Kugelrampeneinrichtung 19 hier in axialer Richtung 42 (A) über ein Axiallager 23 verdrehbar am Außenkorb 5 ab. Die Kugelrampeneinrichtung 19 weist zumindest einen Außenrampenring 21, der am ersten Drucktopf 16 angebunden ist, und zumindest einen Innenrampenring 20 auf, der sich mittelbar oder unmittelbar am Axiallager 23 abstützt. Vorzugsweise sind zwischen dem Innenrampenring 20 und dem Außenrampenring 21 in Umfangsrichtung der Reibungskupplung 27 Kugeln 22 angeordnet.

In radialer Richtung 45 (R) innerhalb des Innenkorbs 6 ist ein Freilauf 24 angeordnet, über den in einer Drehrichtung das Drehmoment auf die Kugelrampeneinrichtung 19, vorzugsweise über einen Freilauftopf 25 übertragbar ist, um die Reibpaarung 10 in der ersten Betätigungsrichtung 43 einzurücken. Der Innenrampenring 20 stützt sich über den Freilauftopf 25 am Axiallager 23 ab. Ein Außenring, also die Ausgangsseite, des Freilaufs 24 ist drehfest in einer drehfest mit Innenkorb 6 verbundenen oder einteilig mit dem Innenkorb 6 ausgebildeten Nabe 7 angeordnet. Alternativ kann der Innenkorb 6 auch einteilig mit der Nabe 7 ausgebildet sein. Die Nabe 7 ist mit einer ersten Abtriebswelle 34 der ersten Antriebseinheit 29, vorzugsweise über eine Steckverzahnung 8, verbindbar.

Der Freilauftopf 25 und/oder die Nabe 7 weist/weisen zumindest eine sich in axialer Richtung 42 (A) erstreckende Verschraubungsöffnung 26 auf, die ausgebildet ist, die Verschraubung des Außenkorbs 5 oder eines mit dem Außenkorb 5 verbundenen Bauteils, beispielsweises des Zweimassenschwungrads 36, das heißt der Primärseite 2 des Zweimassenschwungrads 36, mit einer zweiten Abtriebswelle einer zweiten Antriebseinheit 30, zum Beispiel einer Kurbelwelle eines Verbrennungsmotors, zu ermöglichen. Dabei ist der gezeigte Ausschnitt des Zusammenbaus so vormontiert mit der zweiten Abtriebswelle verbindbar.

Die Reibpaarung 10 weist in axialer Richtung 42 abwechselnde, vorzugsweise trockenlaufende, Außenlamellen 11 und Innenlamellen 12 auf. Von den Außenlamellen 11 und Innenlamellen 12 befindet sich eine erste Endlamelle 13 mit dem ersten Drucktopf 16 und eine zweite, der ersten Endlamelle 13 in axialer Richtung 42 gegenüberliegende Endlamelle 14 mit dem zweiten Drucktopf 17 in Anlage. Die Außenlamellen 11, im dargestellten Ausführungsbeispiel
einschließlich der beiden Endlamellen 13 und 14, sind drehfest am Außenkorb 5 befestigt, während die Innenlamellen 14 drehfest am Innenkorb 6 befestigt sind, wobei jeweils vorzugsweise Steckverzahnungen zum Einsatz kommen. Die Außenlamellen 11 und/oder die Innenlamellen 12 sind darüber hinaus in axialer Richtung 42 (A) durch die Drucktöpfe 16 und 17 verlagerbar. Der erste Drucktopf 16 ist in axialer Richtung 42 (A) zwischen dem Außenkorb 5 und der ersten Endlamelle 13 angeordnet.

Zwischen benachbarten Außenlamellen 11 und/oder zwischen benachbarten Innenlamellen 12 ist jeweils zumindest eine Wellfeder 15 angeordnet, die eine entsprechende Vorspannung aufweist, um die Lamellen 11 und 12 bei ausgerückter Reibpaarung 10 zu trennen. Ein Sicherungsring 18 ist zum Anliegen an der zweiten Endlamelle 14 eingerichtet und sichert die Lamellen 11 und 12, insbesondere die Außenlamellen 11 zur offenen Seite des Außenkorbs 5.

Drehfest mit der in der Steckverzahnung 8 der Nabe 7 eingesteckten ersten Abtriebswelle 34 ist ein Rotor 9 einer elektrischen Maschine beziehungsweise eines Elektromotors 29 verbunden. Somit ist der Rotor 9 mit dem Innenkorb 6 drehfest verbunden. Die erste Abtriebswelle 34 kann ferner als Getriebeeingangswelle ausgebildet sein oder mit einem Drehmomentwandler oder einer Anfahrkupplung (Einzelkupplung oder Doppelkupplung) verbunden sein.

Die elektrische Maschine 29, beziehungsweise der Elektromotor, ist vorzugsweise als elektrischer Fahrmotor ausgebildet, der nicht nur in einem Fahrbetrieb, sondern auch in einem Generatorbetrieb betreibbar ist.

Obwohl dies nicht dargestellt ist, ist es von Vorteil, wenn die Reibungskupplung 27 in radialer Richtung 45 (R) und/oder in axialer Richtung 42 (A) zumindest teilweise innerhalb des Rotors 9 aufgenommen ist, zum Beispiel indem der Rotor 9 topfförmig ausgebildet ist und sich mit Bezug auf Figur 1 in radialer Richtung 45 (R) außerhalb des Außenkorbs 5 (in der Darstellung nach rechts) in Richtung des Zweimassenschwungrads 36 erstreckt. Dadurch ist es möglich, den axialen Bauraum zu verringern.

Bei elektrischer Fahrt, Segelbetrieb oder Rekuperation ist die Reibungskupplung 27 ausgerückt und der Verbrennungsmotor 30 wird nicht mitgeschleppt. Um das Schleppmoment auf ein Minimum zu reduzieren, sind die Lamellen 11 und 12 durch die Wellfedern 15 gleichmäßig beabstandet.

Zur Erzeugung eines Schubmoments (Verbrennerstart/Motorbremse) werden die Lamellen 11 und 12 über den zweiten Drucktopf 17 mittels einer Eingabe von außen und mittels externer Energie direkt betätigt und mit Bezug auf Figur 1 nach links gedrückt. Der zweite Drucktopf 17 weist dabei eine gewisse Weichheit auf, um die Anpresskraft und damit das Drehmoment sauber einregeln zu können.

Wenn der Verbrennungsmotor läuft und den elektrischen Fahrmotor einholt (Drehzahl Verbrennungsmotor und Drehzahl elektrischer Fahrmotor sind gleich) greift der Freilauf 24, durch den ein Teil des Drehmoments auf die Innenrampe 20 der Kugelrampeneinrichtung 19 übertragen wird. Dies resultiert in einer relativen Verdrehung der Rampenringe 20 und 21 zueinander, also Tordierung der Kugelrampeneinrichtung 19.

Durch die relative Verdrehung der Kugelrampeneinrichtung 19 wird deren (minimale) Stelllänge 48 auf eine (maximale) Stelllänge 49 vergrößert und eine Axialkraft erzeugt, durch die die Reibungskupplung 27 im Zugbetrieb des Verbrennungsmotors 30 dauerhaft geschlossen bleibt. Bei diesem Vorgang werden die Lamellen 11 und 12 mit Bezug auf Figur 1 nach rechts verlagert, bis die zweite Endlamelle 14 am Sicherungsring 18 ansteht. Die Reibungskupplung 27 ist somit im Zugbetrieb energiefrei geschlossen.

Wenn der Verbrennungsmotor 30 nicht mehr benötigt wird, wird zum Beispiel die Kraftstoffzufuhr unterbrochen. Sobald die Drehzahl des Verbrennungsmotors 30 niedriger als die Drehzahl des elektrischen Fahrmotors 29 ist, öffnet die Reibungskupplung 27 selbsttätig, wobei zwischen den Lamellen 11 und 12 angeordnete Wellfedern 15 die einzelnen Lamellen 11 und 12 auseinanderdrücken und dabei die Kugelrampeneinrichtung 19 in ihre relative Ausgangslage zurückdrehen, sodass wieder eine minimale Stelllänge 48 vorliegt.

Bei elektrischer Fahrt, Segelbetrieb und Rekuperation ist die K0-Kupplung ausgerückt, um den Verbrennungsmotor nicht mitschleppen zu müssen.

Vorteilhaft bei dieser Anordnung ist, dass beim Übergang vom Schubbetrieb in den Zugbetrieb die Reibungskupplung 27 nicht öffnet, sondern lediglich eine Verlagerung der Lamellen 11 und 12 (in Figur 1 von links nach rechts) erfolgt.

Die vorangegangenen Ausführungsbeispiele betreffen eine rotorintegrierte K0-Kupplung, die zur Generierung eines Schubmomentes über eine Aktoreinrichtung (elektrisch, hydraulisch oder pneumatisch) betätigt werden kann. Im Zugbetrieb erfolgt die Momentenübertragung energiefrei über den Freilauf 24, der als Vorsteuerelement der Kugelrampeneinrichtung 19 ausgebildet ist. Das Hauptmoment wird über Reibpaarung10 übertragen.

In Fig. 2 ist ein Antriebsstrang 32 in einem Hybridfahrzeug 33 gezeigt. Der Antriebsstrang weist eine erste Antriebseinheit 29, bevorzugt einen als Fahrmotor eingerichteter Elektromotor, und eine zweite Antriebseinheit 30, bevorzugt einen Verbrennungsmotor, welche jeweils einzeln oder in Reihe betreibbar sind. Dazu ist zwischen den beiden Antriebseinheiten 29 und 30 eine Reibungskupplung 27, bevorzugt wie oben beschrieben, angeordnet. Dieses gesamte Antriebsaggregat ist drehmomentübertragend mit einem linken Antriebsrad 37 und einem rechten Antriebsrad 38 verbunden, wobei die Verbindung hier schematisch dargestellt ist und notwendige Zwischenelemente nicht dargestellt sind. Das Antriebsaggregat ist mit der Motorachse 41 quer zur Längsachse 40 vor der Fahrerkabine 39 angeordnet.

Mit der hier vorgeschlagenen Reibungskupplung für ein Hybridmodul ist ein vorteilhaftes Zusammenwirken von einem Verbrennungsmotor und einem Elektromotor mechanisch sichergestellt.

## Patentansprüche

1. Reibungskupplung (27) mit einer Rotationsachse (28) zum lösbaren Übertragen eines Drehmoments zwischen einer ersten Antriebseinheit (29) und einer zweiten Antriebseinheit (30), aufweisend zumindest die folgenden Komponenten:
- ein Reibpaket (10) mit zumindest einer Reibplatte (11) und zumindest einer korrespondierenden Reibscheibe (12) zum Übertragen eines Drehmoments im verpressten Zustand, wobei die zumindest eine Reibplatte (11) mit einer ersten Antriebseinheit (29) verbindbar ist und die zumindest eine Reibscheibe (12) mit einer zweiten Antriebseinheit (30) verbindbar ist;
- ein erstes Betätigungselement (17), welches dazu eingerichtet ist, im eingerückten Zustand das Reibpaket (10) in einer ersten axialen Betätigungsrichtung (44) zu verpressen, wobei ein zweites Betätigungselement (16) vorgesehen ist, welches auf der dem ersten Betätigungselement (17) gegenüberliegenden Seite des Reibpakets (10) angeordnet ist und dazu eingerichtet ist, im eingerückten Zustand das Reibpaket (10) in einer zweiten axialen Betätigungsrichtung (43) zu verpressen, wobei die zweite axiale Betätigungsrichtung (43) der ersten axialen Betätigungsrichtung (44) entgegengerichtet ist, **dadurch gekennzeichnet, dass** die Reibungskupplung (27) weiterhin zumindest die folgenden Komponenten aufweist:
- eine Kugelrampenvorrichtung (19) mit einer Stelllänge (48,49), welche einen Außenrampenring (21) und einen Innenrampenring (20) umfasst, wobei mittels eines relativen Verdrehens des Innenrampenrings (20) gegenüber dem Außenrampenring (21) die Stelllänge (48,49) veränderbar ist;
- einen Freilauf (24), mit einer Ausgangsseite (47) und einer Eingangsseite (46), wobei die Eingangsseite (46) mit dem Innenrampenring (20) der Kugelrampenvorrichtung (19) und die Ausgangsseite (47) mit der zumindest einen Reibscheibe (12) verbunden ist,
wobei das zweite Betätigungselement (16) zwischen dem Reibpaket (10) und dem Außenrampenring (21) der Kugelrampenvorrichtung (19) angeordnet ist, und
wobei das zweite Betätigungselement (16) bei einer minimalen Stelllänge (48) der Kugelrampenvorrichtung (19) ausgerückt ist und bei einer maximalen Stelllänge (49) der Kugelrampenvorrichtung (19) mittels der Kugelrampenvorrichtung (19) eingerückt ist, und
wobei der Freilauf (24) derart eingerichtet ist, dass bei einer größeren Rampendrehzahl des Innenrampenrings (20) als einer Scheibendrehzahl der zumindest einen Reibscheibe (12) ein Drehmoment zwischen der Ausgangsseite (47) und der Eingangsseite (46) übertragbar ist und bei einer kleineren Rampendrehzahl als einer Scheibendrehzahl die Ausgangsseite (47) und die Eingangsseite (46) getrennt sind.

2. Reibungskupplung (27) nach Anspruch 1, wobei zwischen zwei benachbarten Reibplatten (11) und/oder zwischen zwei benachbarten Reibscheiben (12) jeweils eine Beabstandungsfeder (15), bevorzugt eine Wellfeder, zum axialen Auseinanderschieben der benachbarten Reibplatten (11) beziehungsweise Reibscheiben (12) vorgesehen ist.

3. Reibungskupplung (27) nach Anspruch 2, wobei das Reibpaket (10) als Lamellenpaket gebildet ist und die Reibungskupplung (27) einen Außenkorb (5) und einen Innenkorb (6) aufweist, wobei die Reibplatten (11) im Außenkorb (5) rotatorisch fest und axial verschiebbar eingehängt und die Reibscheiben (12) im Innenkorb (6) rotatorisch fest und axial verschiebbar eingehängt sind.

4. Reibungskupplung (27) nach Anspruch 2 oder 3, wobei der Innenrampenring (20) mittels eines Axiallagers (23) am Außenkorb (5) abgestützt ist, bevorzugt mittelbar über einen Freilauftopf (25), welcher eingangsseitig mit dem Freilauf (24) verbunden ist.

5. Reibungskupplung (27) nach einem der Ansprüche 2 bis 4, wobei zwischen dem Außenrampenring (21) und dem Reibpaket (10) ein Drucktopf angeordnet ist, welcher im Außenkorb (5) rotatorisch fest und axial verschiebbar eingehängt ist.

6. Reibungskupplung (27) nach einem der Ansprüche 2 bis 5, wobei der Innenkorb (6) und die Eingangsseite (46) des Freilaufs (24) je eine zueinander fluchtend und/oder überdeckend ausrichtbare Durchgangsöffnung (26) aufweisen, durch welche ein Schraubinstrument hindurchführbar ist, um die Reibungskupplung (27) mit einer Abtriebswelle (34) einer ersten Antriebseinheit (29) und/oder einer zweiten Antriebseinheit (30) zu verschrauben.

7. Hybridmodul (31) für einen Antriebsstrang (32), bevorzugt eines Hybridfahrzeugs (33), aufweisend zumindest die folgenden Komponenten:
- eine Reibungskupplung (27) nach einem der vorhergehenden Ansprüche; und
- eine erste Antriebseinheit (29), welche ein Elektromotor ist, wobei der Elektromotor (29) mit der zumindest einen Reibscheibe (12) drehmomentübertragend verbunden ist.

8. Antriebsstrang (32) für ein Hybridfahrzeug (33), aufweisend eine zweite Antriebseinheit (30) mit einer zweiten Abtriebswelle und ein Hybridmodul (31) nach Anspruch 7, wobei die zweite Antriebseinheit (30) über ihre zweite Abtriebswelle mittels der ersten Antriebseinheit (29) antreibbar ist, wenn das Reibpaket (10) der Reibungskupplung (27) verpresst ist.

## Claims

1. A friction clutch (27) with an axis of rotation (28) for releasably transmitting a torque between a first drive unit (29) and a second drive unit (30), having at least the following components:
- a friction pack (10) with at least one friction plate (11) and at least one corresponding friction disc (12) for transmitting a torque in the pressed state, wherein the at least one friction plate (11) can be connected to a first drive unit (29) and the at least one friction disc (12) can be connected to a second drive unit (30);
- a first actuating element (17) which is configured to press the friction pack (10) in a first axial actuation direction (44) in the engaged state, wherein a second actuating element (16) is provided which is arranged on the side of the friction pack (10) opposite the first actuating element (17) and is configured to press the friction pack (10) in a second axial actuation direction (43) in the engaged state, wherein the second axial actuation direction (43) is opposite the first axial actuation direction (44), **characterized in that** the friction clutch (27) also has at least the following components:
- a ball ramp device (19) with an adjusting length (48, 49) which comprises an outer ramp ring (21) and an inner ramp ring (20), wherein the adjusting length (48, 49) can be changed by means of a relative rotation of the inner ramp ring (20) in relation to the outer ramp ring (21);
- a freewheel (24) with an output side (47) and an input side (46), wherein the input side (46) is connected to the inner ramp ring (20) of the ball ramp device (19) and the output side (47) is connected to the at least one friction disc (12),
wherein the second actuating element (16) is arranged between the friction pack (10) and the outer ramp ring (21) of the ball ramp device (19), and
wherein the second actuating element (16) is disengaged at a minimum adjusting length (48) of the ball ramp device (19) and is engaged at a maximum adjusting length (49) of the ball ramp device (19) by means of the ball ramp device (19), and
wherein the freewheel (24) is configured such that, at a ramp speed of the inner ramp ring (20) higher than a disc speed of the at least one friction disc (12), a torque can be transmitted between the output side (47) and the input side (46), and the output side (47) and the input side (46) are separated at a lower ramp speed than a disc speed.

2. The friction clutch (27) according to claim 1, wherein, between two adjacent friction plates (11) and/or between two adjacent friction discs (12), in each case a spacing spring (15), preferably a corrugated spring, is provided for axially pushing the adjacent friction plates (11) or friction discs (12) apart.

3. The friction clutch (27) according to claim 2, wherein the friction pack (10) is formed as a disc set and the friction clutch (27) has an outer cage (5) and an inner cage (6), wherein the friction plates (11) are suspended in the outer cage (5) in a rotationally fixed and axially displaceable manner and the friction discs (12) are suspended in the inner cage (6) in a rotationally fixed and axially displaceable manner.

4. The friction clutch (27) according to claim 2 or 3, wherein the inner ramp ring (20) is supported on the outer cage (5) by means of an axial bearing (23), preferably indirectly via a freewheel pot (25) which is connected on the input side to the freewheel (24).

5. The friction clutch (27) according to one of claims 2 to 4, wherein a pressure pot is arranged between the outer ramp ring (21) and the friction pack (10), the pressure pot being suspended in the outer basket (5) in a rotationally fixed and axially displaceable manner.

6. The friction clutch (27) according to one of claims 2 to 5, wherein the inner cage (6) and the input side (46) of the freewheel (24) each have a through opening (26) which can be aligned in a flush and/or overlapping manner to one another and through which a screwing instrument can be passed to screw the friction clutch (27) to an output shaft (34) of a first drive unit (29) and/or a second drive unit (30).

7. A hybrid module (31) for a drive train (32), preferably of a hybrid vehicle (33), having at least the following components:
- a friction clutch (27) according to one of the preceding claims; and
- a first drive unit (29) which is an electric motor, wherein the electric motor (29) is connected to the at least one friction disc (12) in a torque-transmitting manner.

8. A drive train (32) for a hybrid vehicle (33), having a second drive unit (30) with a second output shaft and a hybrid module (31) according to claim 7, wherein the second drive unit (30) can be driven via its second output shaft by means of the first drive unit (29) when the friction pack (10) of the friction clutch (27) is pressed.

## Revendications

1. Embrayage à friction (27) présentant un axe de rotation (28) pour la transmission pouvant être interrompue d'un couple entre une première unité d'entraînement (29) et une seconde unité d'entraînement (30), présentant au moins les composants suivants :
- un paquet de friction (10) présentant au moins une plaque de friction (11) et au moins un disque de friction correspondant (12) pour transmettre un couple à l'état pressé, l'au moins une plaque de friction (11) pouvant être reliée à une première unité d'entraînement (29) et l'au moins un disque de friction (12) peuvent être relié à une seconde unité d'entraînement (30) ;
- un premier élément d'actionnement (17) qui est conçu pour presser le paquet de friction (10) dans une première direction d'actionnement axiale (44) à l'état embrayé, un second élément d'actionnement (16) étant prévu, lequel est monté sur le côté du paquet de friction (10) opposé au premier élément d'actionnement (17) et conçu pour presser le paquet de friction (10) dans une seconde direction d'actionnement axiale (43) à l'état embrayé, la seconde direction d'actionnement axiale (43) étant opposée à la première direction d'actionnement axiale (44), **caractérisé en ce que** l'embrayage à friction (27) comprend en outre au moins les composants suivants :
- un dispositif de rampe à bille (19) présentant une longueur de réglage (48, 49), qui comprend une bague de rampe externe (21) et une bague de rampe interne (20), la longueur de réglage (48, 49) étant modifiable au moyen d'une rotation relative de la bague de rampe interne (20) par rapport à la bague de rampe externe (21) ;
- une roue libre (24), avec un côté sortie (47) et un côté entrée (46), le côté entrée (46) étant relié avec la bague de rampe interne (20) du dispositif de rampe à bille (19) et le côté sortie (47) avec l'au moins un disque de friction (12),
le second élément d'actionnement (16) étant agencé entre le paquet de friction (10) et la bague de rampe externe (21) du dispositif de rampe à bille (19) et
le second élément d'actionnement (16) étant débrayé à une longueur de réglage minimale (48) du dispositif de rampe à bille (19) et embrayé à une longueur de réglage maximale (49) du dispositif de rampe à bille (19) au moyen du dispositif de rampe à bille (19) et
la roue libre (24) étant conçue de telle sorte qu'à une vitesse de rampe de la bague de rampe interne (20) plus élevée qu'une vitesse de disque du au moins un disque de friction (12), un couple puisse être transmis entre le côté sortie (47) et le côté entrée (46) et qu'à une vitesse de rampe inférieure à une vitesse de disque, le côté sortie (47) et le côté entrée (46) soient séparés.

2. Embrayage à friction (27) selon la revendication 1, dans lequel, entre deux plaques de friction adjacentes (11) et/ou entre deux disques de friction adjacents (12), se trouve respectivement un ressort d'écartement (15), de préférence un ressort ondulé, pour éloigner par poussée axiale les plaques de friction (11) ou les disques de friction (12) adjacents.

3. Embrayage à friction (27) selon la revendication 2, dans lequel le paquet de friction (10) est formé comme un paquet de disques et l'embrayage à friction (27) présente une cage externe (5) et une cage interne (6), les plaques de friction (11) étant suspendues dans la cage externe (5) d'une manière fixe en rotation et déplaçable axialement et les disques de friction (12) étant suspendus dans la cage interne (6) d'une manière fixe en rotation et déplaçable axialement.

4. Embrayage à friction (27) selon la revendication 2 ou 3, dans lequel la bague de rampe interne (20) est supportée sur la cage externe (5) au moyen d'un palier axial (23), de préférence indirectement par l'intermédiaire d'une cavité de roue libre (25) qui est reliée côté entrée à la roue libre (24).

5. Embrayage à friction (27) selon l'une quelconque des revendications 2 à 4, dans lequel une cavité de pression est agencée entre la bague de rampe externe (21) et le paquet de friction (10), qui est suspendu dans la cage externe (5) d'une manière fixe en rotation et déplaçable axialement.

6. Embrayage à friction (27) selon l'une quelconque des revendications 2 à 5, dans lequel la cage interne (6) et le côté entrée (46) de la roue libre (24) présentent chacun une ouverture traversante (26) qui peuvent être alignées à fleur et/ou en chevauchement, à travers lesquelles un instrument de vissage peut être passé pour visser l'embrayage à friction (27) sur un arbre de sortie (34) d'une première unité d'entraînement (29) et/ou d'une seconde unité d'entraînement (30).

7. Module hybride (31) pour une chaîne cinématique (32), de préférence d'un véhicule hybride (33), comportant au moins les composants suivants :
- un embrayage à friction (27) selon l'une quelconque des revendications précédentes ; et
- une première unité d'entraînement (29) qui est un moteur électrique, le moteur électrique (29) étant relié à l'au moins un disque de friction (12) d'une manière à pouvoir transmettre un couple.

8. Chaîne cinématique (32) pour un véhicule hybride (33), présentant une seconde unité d'entraînement (30) présentant un second arbre de sortie et un module hybride (31) selon la revendication 7, dans laquelle la seconde unité d'entraînement (30) peut être entraînée par le biais de son second arbre de sortie au moyen de la première unité d'entraînement (29) lorsque le paquet de friction (10) de l'embrayage à friction (27) est pressé.
